# EUROPEAN PATENT SPECIFICATION

(11) **EP 0 346 947 B1**
(45) Date of publication and mention of the grant of the patent: **03.08.1994**
(21) Application number: 89115116.9
(22) Date of filing: 17.10.1986
(51) Int. Cl.: G03B 42/04

(54) **Radiation image recording and read-out apparatus**
Gerät zur Aufzeichnung und Auswertung von Strahlungsbildern
Appareil d'enregistrement et de triage pour les images radiologiques

(30) Priority: 18.10.1985 JP 232514/85; 18.10.1985 JP 232515/85; 18.10.1985 JP 232518/85; 19.10.1985 JP 232304/85; 19.10.1985 JP 234187/85
(43) Date of publication of application: 20.12.1989
(62) Divisional of application: 86114429.3
(73) Proprietor: Fuji Photo Film Co., Ltd., Kanagawa-ken (JP)
(72) Inventor: Shimura, Kazuo Fuji Photo Film Co., Ltd., Ashigarakami-gun Kanagawa-ken (JP); Mori, Nobufumi Fuji Photo Film Co., Ltd., Ashigarakami-gun Kanagawa-ken (JP); Saotome, Shigeru Fuji Photo Film Co., Ltd., Ashigarakami-gun Kanagawa-ken (JP); Yoshimura, Ryoichi Fuji Photo Film Co., Ltd., Ashigarakami-gun Kanagawa-ken (JP); Watanabe, Hideo Fuji Photo Film Co., Ltd., Ashigarakami-gun Kanagawa-ken (JP); Hosoi, Yuichi Fuji Photo Film Co., Ltd., Ashigarakami-gun Kanagawa-ken (JP)
(74) Representative: Klunker . Schmitt-Nilson . Hirsch

(56) References cited:
- EP-A- 0 115 802
- EP-A- 0 125 800
- EP-A- 0 140 374
- EP-A- 0 178 625
- EP-A- 0 179 418
- EP-B- 0 056 639
- EP-B- 0 077 676

## Description

This invention relates to a radiation image recording and read-out apparatus, according to the pre-characterizing part of claim 1.

When certain kinds of phosphors are exposed to a radiation such as X-rays, α-rays, β-rays, γ-rays, cathode rays or ultraviolet rays, they store a part of the energy of the radiation. Then, when the phosphor which has been exposed to the radiation is exposed to stimulating rays such as visible light, light is emitted by the phosphor in proportion to the stored energy of the radiation. A phosphor exhibiting such properties is referred to as a stimulable phosphor.

As disclosed in U.S. Patent No. 4,258,264, 4,276,473, 4,315,318 and 4,387,428, and Japanese Unexamined Patent Publication No. 56(1981)-11395, it has been proposed to use a stimulable phosphor in a radiation image recording and reproducing system. Specifically, a sheet comprising the stimulable phosphor (hereinafter referred to as a stimulable phosphor sheet or simply as a sheet) is first exposed to a radiation passing through an object to have a radiation image stored thereon, and is then scanned with stimulating rays which cause it to emit light in proportion to the stored radiation energy. The light emitted by the stimulable phosphor sheet when the sheet is exposed to the stimulating rays is photoelectrically detected and converted into an electric image signal, which is processed as desired to reproduce a visible image having an improved image quality, particularly a high diagnostic efficiency and accuracy. The finally obtained visible image may be reproduced in the form of a hard copy or may be displayed on a cathode ray tube (CRT). In this radiation image recording and reproducing system, the stimulable phosphor sheet is used to temporarily store the radiation image in order to reproduce the final visible image therefrom on a final recording medium. For economical reasons, therefore, it is desirable that the stimulable phosphor sheet be used repeatedly.

Further, in a mobile X-ray diagnostic station such as a traveling X-ray diagnostic station in the form of a vehicle like a bus which is provided with a radiation image recording and read-out apparatus for use in the aforesaid radiation image recording and reproducing system and moves from place to place to record radiation images for mass medical examinations, it is disadvantageous to load the mobile X-ray diagnostic station with a large number of stimulable phosphor sheets, and the number of the stimulable phosphor sheets which can be loaded on the mobile X-ray diagnostic station is limited. Therefore, it is desired to load the mobile X-ray diagnostic station with stimulable phosphor sheets which can be used repeatedly, store the radiation images of the respective objects on the stimulable phosphor sheets, transfer the electric image signals read out from the stimulable phosphor sheets to a recording medium having a large storage capacity, such as a magnetic tape, and circulate and reuse the stimulable phosphor sheets for further image recording and read-out operations, thereby to obtain the radiation image signals of many objects. Further, when image recording is conducted continuously by circulating and reusing the stimulable phosphor sheets, it becomes possible to increase the image recording speed in mass medical examinations. This is very advantageous in practical use.

In order to reuse stimulable phosphor sheets as described above, the radiation energy remaining on the stimulable phosphor sheet after it is scanned with stimulating rays to read out the radiation image stored thereon should be erased by exposure to light or heat as described, for example, in U.S. Patent No. 4,400,619 or Japanese Unexamined Patent Publication No. 56(1981)-12599. The stimulable phosphor sheet should then be used again for radiation image recording.

EP-A-0140374 and EP-A-0125800 each disclose a radiation image recording and read-out apparatus according to the pre-characterizing part of claim 1, wherein the transport means is a circulation and conveyance means for conveying at least one stimulable phosphor sheet for recording a radiation image thereon along a predetermined circulation path.

In the aforesaid radiation image recording and read-out apparatus, recording and read-out of radiation images can be conducted continuously and efficiently.

However, the aforesaid radiation image recording and read-out apparatus has the drawback that, since the circulation path for the stimulable phosphor sheet is provided in the apparatus, the apparatus becomes large.

The object of the present invention is to provide a radiation image recording and read-out apparatus which is very small and in which a stimulable phosphor sheet is used repeatedly.

A further object of the invention is to provide a radiation image recording and read-out apparatus which is small and provided with a simple mechanism for feeding a stimulable phosphor sheet and in which the stimulable phosphor sheet is used repeatedly and image recording is conducted continuously.

A still further object is a radiation image recording and read-out apparatus which is small and free from a deviation in position of the stimulable phosphor sheet in the course of conducting image recording, image read-out and erasing, thereby providing a radiation image having an improved image quality, particularly a high diagnostic efficiency and accuracy.

These objects are achieved according to the features of claim 1.

An embodiment of the present invention provides a radiation image recording and read-out apparatus for positioning a stimulable phosphor sheet at an exposure position where said stimulable phosphor sheet is exposed to a radiation carrying image information, exposing said stimulable phosphor sheet to the radiation to have a radiation image stored thereon, reciprocably conveying said stimulable phosphor sheet in one direction from said exposure position, and reading out said radiation image stored on said stimulable phosphor sheet in the course of said reciprocable conveyance,
wherein the conveyance means, which is used for conveying and positioning said stimulable phosphor sheet at said exposure position and then reciprocably conveying said stimulable phosphor sheet in one direction, by a pair of nip rollers.

Since the phosphor sheet is moved between the case and a position projected out of the case in the course of the image read-out, it is not necessary to provide a space for conveying the stimulable phosphor sheet for sub-scanning with stimulating rays inside of the case, and it is possible to make the apparatus very small. Therefore, the radiation image recording and read-out apparatus of the present invention is suitable also for use in a mobile X-ray diagnostic station, a ship, a submarine boat or the like wherein it is not always possible to ensure a large space for loading a medical diagnosis apparatus or the like. The present invention is very advantageous for medical diagnosis or the like in that radiation image recording becomes possible even at a place where it has heretofore been impossible.

It is only necessary that the size of the case be such that the stimulable phosphor sheet can be housed therein and it is possible to make the case small, approximately to a size for housing a single stimulable phosphor sheet.

Since the space outside of the case is utilized as the sheet movement space for sub-scanning, it is possible to minimize the size of the case to approximately a size for housing a single stimulable phosphor sheet.

### BRIEF DESCRIPTION OF THE DRAWINGS

Figure 1 is a general perspective view showing one embodiment of the radiation image recording and read-out apparatus in accordance with the present invention,
Figure 2 is a perspective view showing the principal parts of the embodiment of Figure 1,
Figure 3 and 4 are sectional side views showing the conditions of the embodiment of Figure 1 during image recording and image read-out,
Figure 5 is a sectional side view showing a further embodiment of the radiation image recording and read-out apparatus in accordance with the present invention,
Figure 6 is a perspective view showing a still further embodiment of the radiation image recording and read-out apparatus in accordance with the present invention,
Figure 7 is an exploded perspective view showing the embodiment of Figure 6,
Figure 8 is a transverse sectional view showing the embodiment of Figure 6 , and
Figure 9 is a fragmentary vertical sectional view showing the embodiment of Figure 6.

The present invention will hereinbelow be described in further detail with reference to the accompanying drawings.

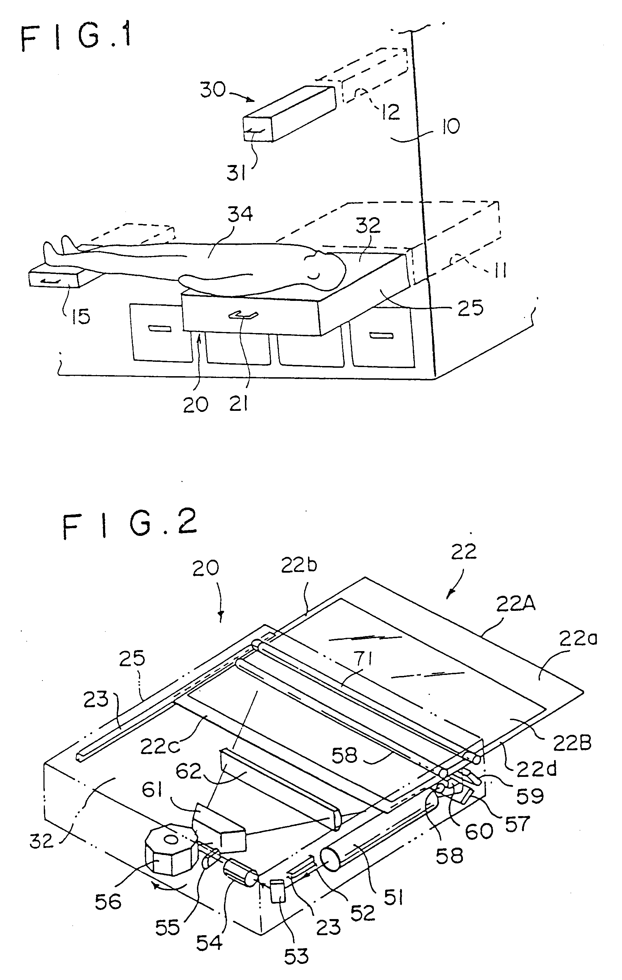

Referring to Figure 1, an embodiment of the radiation image recording and read-out apparatus in accordance with the present invention comprises a main body 20 having a handle 21 housed in a wall 10 of a medical examination room of a hospital or the like, and a radiation source housing section 30 having a handle 31 adapted for housing in the wall 10. The main body 20 is constituted by a case 25.

When the apparatus is not in use, the main body 20 and the radiation source housing section 30 are housed in recesses 11 and 12 in the wall 10.

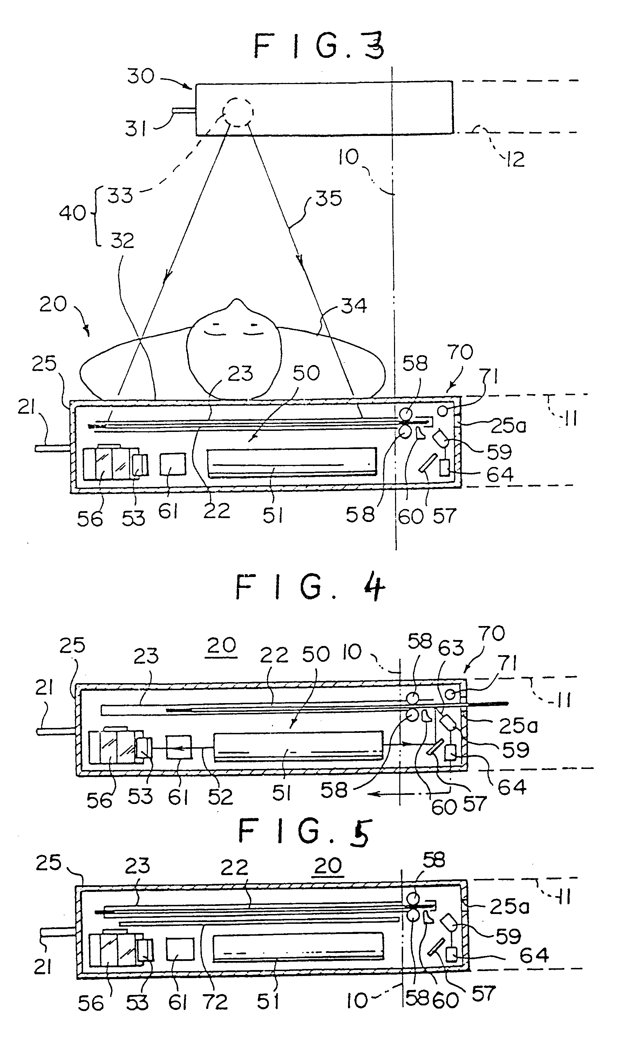

As shown in Figure 2 , the stimulable phosphor sheet 22 comprising a transparent substrate 22A and a stimulable phosphor layer 22B overlaid on the substrate 22A is positioned in the case 25 of the main body 20. The upper surface of the case 25, i.e. the surface facing the sheet 22 from above when the sheet 22 is housed in the case 25, constitutes the image recording table 32. As shown in Figure 3, when the apparatus is in the state in which it is used, i.e. when the radiation source housing section 30 and the main body 20 are pulled out of the wall 10, the radiation source 33 faces the image recording table 32. The end portion of the case 25 on the side of the recess 11 is provided with an elongated opening 25a which faces the end face of the sheet 22.

As shown in Figure 4, after a radiation image of an object 34 is stored on the stimulable phosphor sheet 22, the drive rollers 58, 58 are rotated to move the sheet 22 at a predetermined speed towards the opening 25a. When radiation image recording is conducted, the drive rollers 58, 58 grip the holding portion 22a at one end of the sheet 22. Therefore, when the drive rollers 58, 58 are rotated after the image recording, the sheet 22 is immediately conveyed as mentioned above. When the sheet 22 carrying the radiation image stored thereon is thus moved by the drive rollers 58, 58 in the sub-scanning direction, the sheet 22 passes through the opening 25a and is projected out of the case 25. Since the laser beam 52 scans the sheet 22 in the vicinity of the opening 25a, almost the whole of the sheet 22 is projected out of the case 25 when the image read-out is finished. Therefore, the case 25 need not be provided with a special space for the sub-scanning of the sheet 22, and may be formed to a size slightly larger than the sheet 22.

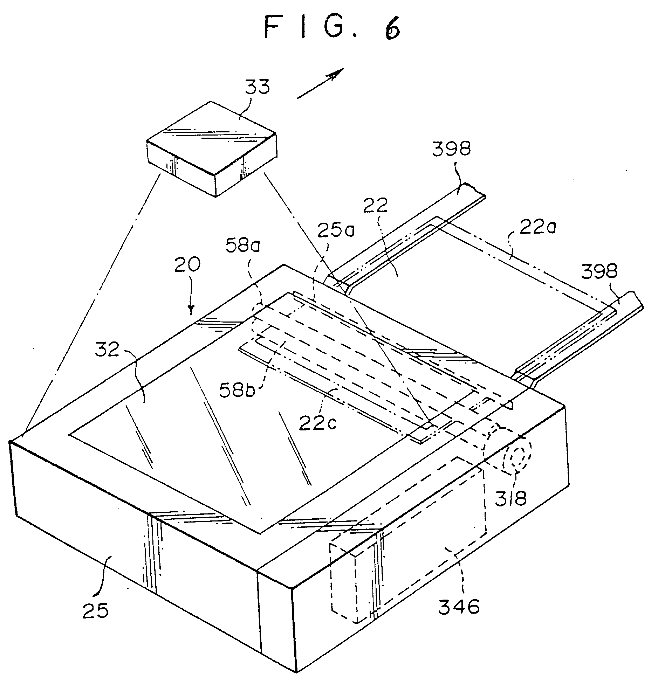

When the image read-out is finished as mentioned above, the stimulable phosphor sheet 22 is gripped at the holding portion 22c between the drive rollers 58, 58. In this condition, the drive rollers 58, 58 are rotated reversely to the rotating direction at the time of the image read-out, and the sheet 22 is returned to the exposure position inside of the case 25, i.e. to the position facing the image recording table 32. In the course of returning, the sheet 22 passes under the erasing section 70 provided inside of the case 25 in the vicinity of the opening 25a, and is subjected to image (residual image) erasing. By way of example, the erasing section 70 is constituted by an erasing light source 71 positioned above the sheet 22. The erasing light source 71 is constituted by a fluorescent lamp or the like, and is turned on when the sheet 22 is returned to the exposure position. Thus the stimulable phosphor layer 22B is exposed via the transparent substrate 22A to the erasing light. As shown in Figure 5, the erasing section 70 may be constituted by a surface type erasing light source 72 such as an EL (electroluminescence) plate positioned under the sheet 22 at the exposure position to face the stimulable phosphor layer 22B. In this case, the substrate 22A need not necessarily be formed of a transparent member. With the configuration of Figure 5, it is possible to conduct the secondary erasing easily by utilizing the surface type erasing light source 72. Also, the image (residual image) erasing may be conducted not immediately when the sheet 22 is returned into the case 25 after the image read-out, but may be carried out just prior to the next radiation image recording, thereby to perform the residual image recording and the secondary erasing by a single erasing step.

For example, in Figure 3 , the stimulable phosphor sheet 22 may be positioned with the stimulable phosphor layer facing up, and the laser beam 52 may be emitted from above the sheet 22, thereby to conduct the image read-out from the same side as the exposure to the radiation. However, the image read-out should preferably be conducted as shown in Figure 22 since the components of the image read-out section can be disposed on the side opposite to the exposure side and the apparatus can be made small.

In the case where the apparatus is constituted like the embodiment of Figure 1 so that the stimulable phosphor sheet 22 is projected out of the case 25 into the recess 11 in the wall 10 during the image road-out, it is possible to conduct the preliminary read-out and the final read-out easily. Specifically, when the inside of the recess 11 is completely shielded from external light, the preliminary read-out may be conducted by projecting the sheet 22 into the recess 11, and the sheet 22 may then be returned into the case 25 (at this time, the erasing light source 71 or 72 is not turned on). Thereafter, the final read-out may be conducted by projecting the sheet 22 out of the case 25 into the recess 11.

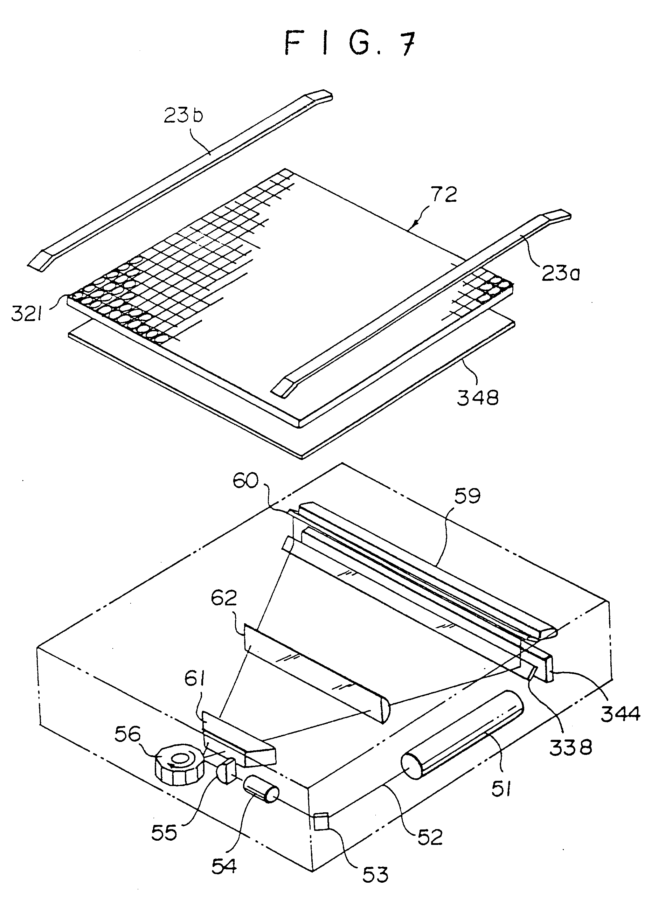

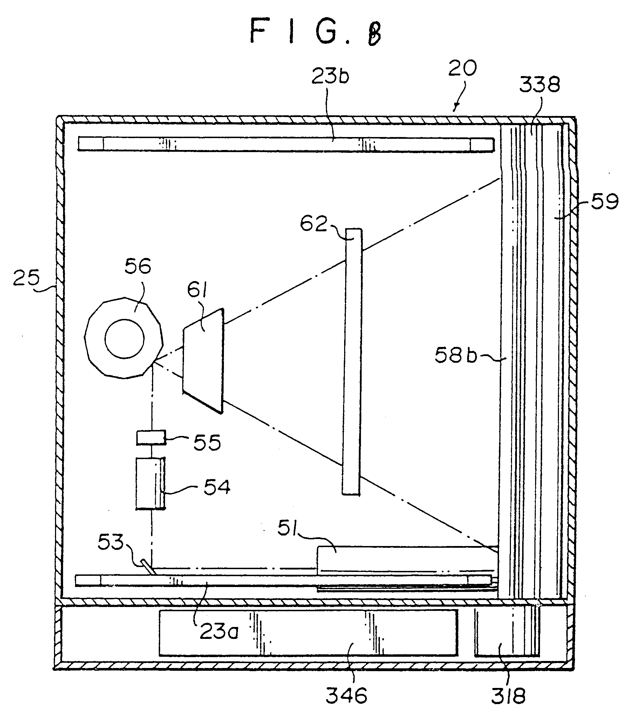

Figures 6 through 9 show a still further embodiment of the radiation image recording and read-out apparatus in accordance with the present invention. In this embodiment, a pair of nip rollers 58a and 58b for sheet conveyance are positioned one above the other to face the opening 25a in the case 25. The nip roller 58b is coupled with a drive shaft of a motor 318. Also, guide members 23a and 23b as shown in Figure 7 having lengths approximately equal to the length of the stimulable phosphor sheet 22 are positioned at the same height as the upper end of the nip roller 58b rotated by the motor 318. As shown in Figure 7 , the erasing light source 72 comprising a plurality of light emitting diodes (LED) 321, 321, ... arrayed closely are positioned under the space between the guide members 23a and 23b. The light emission area of the erasing light source 72 is substantially equal to or larger than the image recording region of the sheet 22.

A semi-transparent mirror 338 is positioned on the optical axis of the cylindrical lens 62 at an angle of 45° with respect to the horizontal under the opening 25a so that the semi-transparent mirror 338 partially reflects the laser beam 52 and partially transmits it to a grid 344. The photomultiplier 59 having a length approximately equal to the length of the opening 25a is positioned above the semi-transparent mirror 338. A reflector 60 constituted by a reflection mirror is disposed in the vicinity of the photomultiplier 59 for guiding the light emitted by the stimulable phosphor sheet 22 to the photomultiplier 59. The grid 344 receives the laser beam 52 passing through the semi-transparent mirror 338 and, for example, generates a rotation control signal for the light deflector 56 or the like as a synchronizing signal.

On the other hand, an electric source 346 may be positioned outside of the case 25, and a printed circuit board 348 for controlling the operation of, for example, the light deflector 56 and the laser beam source 51, by the electric source 346 may be positioned under the erasing light source 72. Reference numeral 398 denotes a guide member for guiding the sheet 22 fed to the case 25 and ejected therefrom.

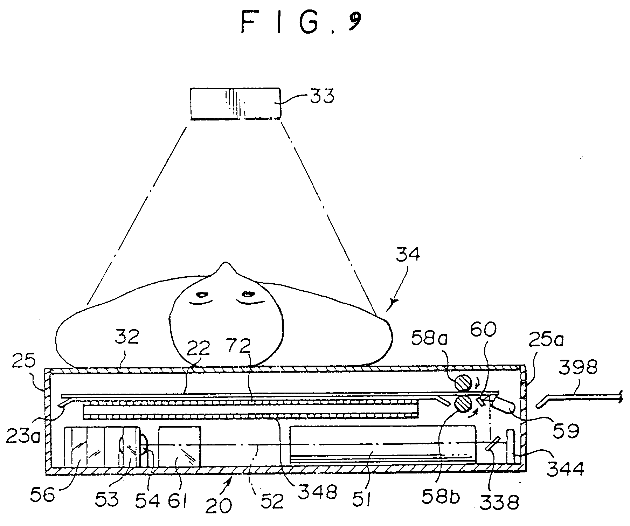

In this embodiment, when the electric source 346 is turned on, the motor 318 is activated. In this condition, the sheet 22 is gripped at its holding portion 22c between the nip rollers 58a and 58b. As shown in Figure 9 , the nip rollers 58a and 53b are rotated in the directions as indicated by the arrows to convey the sheet 22 along the guide members 23a and 23b into the case 25. When the sheet 22 arrives at the inward ends of the guide members 23a and 23b, the motor 318 is stopped. As a result, the nip rollers 58a and 58b grip the holding portion 22a of the sheet 22. In this case, when an optical sensor or the like is positioned at the end of the guide member 23a or 23b, it is possible to easily detect the arrival of the sheet 22 at the ends of the guide members 23a and 23b. In this condition, the radiation source 33 is activated to conduct image recording.

After the object 34 leaves the main body 20, the motor 314 is operated to rotate reversely, and the nip rollers 58a and 58b are thereby rotated reversely to the directions of the arrows. At this time, the laser beam source 51 is activated to conduct image read-out. As the sheet 22 is gradually conveyed in the sub-scanning direction towards the opening 25a by being gripped between the nip rollers 58a and 58b, the light emitted by the sheet 22 is detected by the photomultiplier 59. When the holding portion 22c of the sheet 22 arrives at the nip rollers 58a and 58b, the motor 318 is stopped. Thereafter, the motor 318 is again activated to rotate the nip rollers 58a and 58b in the directions as indicated by the arrows, and the sheet 22 projected out of the opening 25a is conveyed along the guide members 23a and 23b into the case 25. When the sheet 22 arrived at the inward ends of the guide members 23a and 23b, the motor 318 is stopped, and the sheet 22 is held at the predetermined position by the nip rollers 58a and 58b and the guide members 23a and 23b. The LEDs 321, 321, ... of the erasing light source 72 are turned on to conduct erasing.

Since the LEDs emit light with high directivity, erasing may become nonuniform. In such a case, for example, the sheet 22 may be swung or vibrated by the nip rollers 58a and 58b to effect uniform erasing.

## Claims

1. A radiation image recording and read-out apparatus which comprises:
i) a case (25) housing a stimulable phosphor sheet (22) for storing a radiation image, and provided with an opening (25a) at one end portion for allowing passage of said stimulable phosphor sheet (22) therethrough,
ii) an image recording section (40) for exposing said stimulable phosphor sheet (22) which is disposed at an exposure position to a radiation carrying image information to have the radiation image stored on said stimulable phosphor sheet (22),
iii) an image read-out section (50) provided inside said case (25) and comprising photoelectric read-out means (59), transport means (58) as a subscanning means for moving said stimulable phosphor sheet and a main scanning means (51-56) for scanning said stimulable phosphor sheet (22) with stimulating rays in a main scanning direction in the vicinity of said opening (25a) inside of said case (25), wherein said stimulable phosphor sheet (22) carrying said radiation image is exposed to the stimulating rays which cause said stimulable phosphor sheet (22) to emit light in proportion to the stored radiation energy, and the emitted light is read out by said photoelectric read-out means (59) to obtain an image signal, and
iv) an erasing section (70) provided inside said case (25), for releasing radiation energy remaining on said stimulable phosphor sheet (22), for which the image read-out has been conducted at said image read-out section (50), before image recording is conducted on said stimulable phosphor sheet (22), characterized in that the exposure position of the phosphor sheet (22) is inside of the case (25) and in that the transport means (58) is adapted for alternately moving the phosphor sheet (22) between the exposure position and a position in which said stimulable phosphor sheet (22) projects out of said case through said opening (25a).

2. An apparatus as defined in claim 1 wherein said stimulable phospor sheet (22) comprises a substrate (22A) and a stimulable phosphor layer (22B) overlaid on said substrate (22A) and wherein the arrangement is such that said stimulable phosphor sheet (22) is exposed to said radiation from the substrate side inside said case (25), and said stimulable phosphor sheet (22) is exposed to said stimulating rays from the stimulable phosphor layer (22B) side at said image read-out section (50).

## Patentansprüche

1. Strahlungsbildaufzeichnungs- und -Lesevorrichtung, umfassend:
i) ein Gehäuse (25) zur Aufnahme eines zum Speichern eines Strahlungsbildes dienenden anregbaren Leuchtstoffblatts (22), und mit einer an einem Endabschnitt befindlichen Öffnung (25a) zum Durchlassen des anregbaren Leuchtstoffblatts (22),
ii) einen Bildaufzeichnungsabschnitt (40) zum Exponieren des sich in einer Expositionsstellung befindenden anregbaren Leuchtstoffblatts (22) einer Bildinformation beinhaltenden Strahlung, damit das Strahlungsbild auf dem anregbaren Leuchtstoffblatt (22) gespeichert wird,
iii) einen Bildleseabschnitt (50), der im Inneren des Gehäuses (25) vorgesehen ist und eine photoelektrische Leseeinrichtung (59), eine Transporteinrichtung (58) als Nebenabtasteinrichtung zum Bewegen des anregbaren Leuchtstoffblatts und eine Hauptabtasteinrichtung (51-56) aufweist, um das anregbare Leuchtstoffblatt (22) in einer Hauptabtastrichtung in der Nachbarschaft der Öffnung (25a) im Inneren des Gehäuses (25) mit Anregungsstrahlen abzutasten, wobei das das Strahlungsbild tragende anregbare Leuchtstoffblatt (22) den Anregungsstrahlen ausgesetzt wird, die das anregbare Leuchtstoffblatt (22) veranlassen, Licht im Verhältnis zu der gespeicherten Strahlungsenergie zu emittieren, und wobei das emittierte Licht von der photoelektrischen Leseeinrtchtung (59) gelesen wird, um ein Bildsignal zu erhalten, und
iv) einen Löschabschnitt (70), der im Inneren des Gehäuses (25) vorgesehen ist, um Strahlungsenergie freizusetzen, die auf dem anregbaren Leuchtstoffblatt (22) verblieben ist, bei dem das Bild-Auslesen in dem Bildleseabschnitt (50) durchgeführt wurde, bevor eine Bildaufzeichnung auf diesem anregbaren Leuchtstoffblatt (22) erfolgt, **dadurch gekennzeichnet**, daß die Expositionsstellung des Leuchtstoffblatts (22) sich im Inneren des Gehäuses (25) befindet, und daß die Transporteinrichtung (58) dazu ausgebildet ist, das Leuchtstoffblatt (22) abwechselnd zwischen der Expositionsstellung und einer Stellung zu bewegen, in der das anregbare Leuchtstoffblatt (22) durch die Öffnung (25a) des Gehäuses hindurch nach außen vorsteht.

2. Vorrichtung nach Anspruch 1, bei der das anregbare Leuchtstoffblatt (22) ein Substrat (22A) und eine das Substrat (22A) überziehende anregbare Leuchtstoffschicht (22B) aufweist, wobei die Ausgestaltung derart ist, daß das anregbare Leuchtstoffblatt (22) der Strahlung von der Substratseite im Inneren des Gehäuses (25) ausgesetzt wird und das anregbare Leuchtstoffblatt (22) den Anregungsstrahlen von der Seite der anregbaren Leuchtstoffschicht (22B) her in dem Bildleseabschnitt (50) ausgesetzt wird.

## Revendications

1. Appareil d'enregistrement et de lecture d'images de rayonnement, qui comprend :
i) un boîtier (25) logeant une feuille luminescente stimulable (22) destinée à emmagasiner une image d'un rayonnement, et ayant une ouverture (25a) dans une partie d'extrémité, permettant le passage de la feuille luminescente stimulable (22),
ii) une section d'enregistrement d'image (40) destinée à exposer la feuille luminescente stimulable (22) qui a une position d'exposition à un rayonnement transportant une information d'image de manière que l'image du rayonnement soit accumulée dans la feuille luminescente stimulable (22),
iii) une section de lecture d'image (50) formée dans le boîtier (25) et comprenant un dispositif photoélectrique de lecture (59), un dispositif de transport (58) constituant un dispositif de balayage auxiliaire destiné à déplacer la feuille luminescente stimulable, et un dispositif de lecture principale (51-56) destiné à balayer la feuille luminescente stimulable (22) avec des rayons de stimulation dans une direction de lecture principale au voisinage de l'ouverture (25a) et à l'intérieur du boitier (25), la feuille luminescente stimulable (22) portant l'image du rayonnement étant alors exposée aux rayons de stimulation qui provoquent l'émission de lumière par la feuille luminescente stimulable (22) proportionnellement à l'énergie emmagasinée du rayonnement, la lumière émise étant lue par le dispositif photoélectrique de lecture (59) pour l'obtention d'un signal d'image, et
iv) une section d'effacement (70) placée à l'intérieur du boîtier (25) et destinée à libérer l'énergie du rayonnement restant dans la feuille luminescente stimulable (22) sur laquelle la lecture de l'image a été réalisée dans la section de lecture d'image (50), avant qu'un enregistrement d'image soit réalisé sur la feuille luminescente stimulable (22), caractérisé en ce que la position d'exposition de la feuille luminescente (22) se trouve à l'intérieur du boîtier (25), et en ce que le dispositif de transport (58) est destiné à déplacer en alternance la feuille luminescente (22) entre la position d'exposition et une position dans laquelle la feuille luminescente stimulable (22) dépasse du boitier par ladite ouverture (25a).

2. Appareil selon la revendication 1, dans lequel la feuille luminescente stimulable (22) comporte un substrat (22A) et une couche luminescente stimulable (22B) superposée au substrat (22A), et la disposition est telle que la feuille luminescente stimulable (22) est exposée au rayonnement par le côté du substrat à l'intérieur du boîtier (25), et la feuille luminescente stimulable (22) est exposée aux rayons de stimulation du côté de la couche luminescente stimulable (22B) dans la section de lecture d'image (50).
